Europäisches Patentamt

European Patent Office

Office européen des brevets

(19)

(11) Numéro de publication : **0 119 136 B1**

(12)

# FASCICULE DE BREVET EUROPÉEN

(45) Date de publication du fascicule du brevet :
08.07.87

(51) Int. Cl.⁴ : **C 03 B 27/04**

(21) Numéro de dépôt : **84400450.7**

(22) Date de dépôt : **07.03.84**

(54) **Perfectionnement aux machines de trempe du verre.**

(30) Priorité : **10.03.83 FR 8303918**

(43) Date de publication de la demande :
**19.09.84 Bulletin 84/38**

(45) Mention de la délivrance du brevet :
**08.07.87 Bulletin 87/28**

(84) Etats contractants désignés :
**AT BE CH DE FR GB IT LI LU NL SE**

(56) Documents cités :
**US-A- 2 369 368**

(73) Titulaire : **SAINT-GOBAIN VITRAGE**
**Les Miroirs 18, avenue d'Aisace**
**F-92400 Courbevoie (FR)**

(72) Inventeur : **Benard, Claude**
**43 avenue de Verdun**
**F-78290 Croissy sur Seine (FR)**

(74) Mandataire : **Leconte, Jean-Gérard et al**
**Saint-Gobain Recherche 39, Quai Lucien Lefranc**
**F-93304 Aubervilliers Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 119 136 B1

## Description

La présente invention concerne la trempe du verre et plus précisément le réglage de la position des moyens de soufflage dans une machine verticale de trempe du verre.

Il est connu par le document de brevet US-A-2 369 368, une machine pour la trempe du verre en position verticale, ayant des moyens de soufflage disposés face à face et entre lesquels est destiné à être placé le verre à tremper. Dans cette machine, chacun des moyens de soufflage est monté à orientation variable sur un cadre porteur, ledit cadre porteur étant lui-même déplaçable pour s'éloigner ou se rapprocher de l'autre cadre porteur lui faisant face. Dans cette machine, les moyens de soufflage ne sont fixés que par un nombre réduit de points sur le cadre et par des systèmes qui n'assurent pas la rigidité nécessaire pour souffler du gaz de trempe à des pressions élevées.

Il en résulte que la précision de positionnement des moyens de soufflage n'est pas obtenue en cours de fonctionnement de la machine et que ladite machine n'est pas opérationnelle.

Parmi les autres machines actuelles présentant la rigidité voulue pour souffler de l'air à pression élevée sans se déformer et sans que les réglages de position prévus soient altérés de façon à pouvoir fonctionner dans les mêmes conditions satisfaisantes à cadence élevée dans des ambiances de température élevée, les moyens de soufflage destinés à souffler de l'air sur chacune des deux faces du verre, c'est-à-dire les caissons de répartition d'air équipés des outillages adaptés à chaque forme de volume de verre et percés d'ajutages de soufflage ou munis de buses de soufflage ne peuvent que s'écarter ou se rapprocher l'un de l'autre, notamment en pivotant chacun autour d'un axe placé à sa partie supérieure sous l'action d'un vérin, mais ne peuvent pas s'orienter pour s'aligner sur la position non exactement verticale des volumes de verre. En effet, du fait de la courbure des volumes de verre, et de plus en plus fréquemment de leur double courbure, lesdits volumes accrochés à l'aide de pinces par leur bord supérieur ne sont pas toujours exactement verticaux et le seul mouvement possible d'avance ou de recul des moyens de soufflage ne permet pas d'assurer un écartement uniforme desdits moyens de soufflage vis-à-vis des volumes de verre, sur toute leur surface. Il en résulte une irrégularité dans la trempe du verre, les régions les plus rapprochées des moyens de soufflage présentant une trempe plus importante. Pour assurer cependant une trempe suffisante sur toute la surface des volumes de verre, on augmente l'ensemble de la pression de soufflage d'où une augmentation du coût de fonctionnement et une persistance de l'irrégularité de trempe.

Cependant lorsqu'il s'agit de tremper du verre relativement épais, 4 mm et plus, des distances relativement importantes entre le verre et les moyens de soufflage sont pratiquées si bien que les écarts de distances qui résultent de la verticalité non parfaite du verre ne sont pas très gênants.

Mais lorsqu'on veut tremper du verre plus mince, 3 mm et moins, les distances entre le verre et les moyens de soufflage sont plus faibles, les pressions de soufflage sont plus importantes et toute variation de distance se traduit par des irrégularités de trempe beaucoup plus importantes ou même des impossibilités de trempe.

La présente invention vise à fournir une machine de trempe du verre en position verticale ou approximativement verticale, qui soit opérationnelle, c'est-à-dire essentiellement qui ne se déforme pas au cours de son fonctionnement, et qui supprime les défauts des machines opérationnelles actuelles, à savoir essentiellement impossibilité d'aligner les moyens de soufflage par rapport au verre et d'ajuster leur position en maintenant une distance entre le verre et eux qui soit la même sur toute la surface du verre.

Les nouvelles machines proposées par l'invention présentent la rigidité voulue et elles permettent une orientation des moyens de soufflage pour que leur distance vis-à-vis du verre soit identique sur toute la surface des volumes de verre, quelle que soit l'inclinaison prise par lesdits volumes lorsqu'ils sont suspendus par leur bord supérieur.

Elles permettent également une modification de la distance des moyens de soufflage par rapport au verre, sans altérer le parallélisme desdits moyens de soufflage et du verre.

Le positionnement correct et précis des moyens de soufflage par rapport au verre étant ainsi possible, d'une part il n'est plus nécessaire de corriger les défauts rencontrés dans les machines antérieures en augmentant la pression de soufflage et la consommation en énergie se trouve donc réduite et d'autre part la trempe de verre plus mince, de 3 mm et moins, devient possible.

Selon l'invention, les machines pour la trempe du verre en position verticale, ayant des moyens de soufflage, disposés face à face entre lesquels est placé le verre à tremper, montés à orientation variable sur un cadre porteur lui-même déplaçable pour s'éloigner ou se rapprocher de l'autre cadre porteur lui faisant face, sont caractérisées en ce que ces moyens de soufflage sont montés sur le cadre porteur à l'aide d'une pluralité de vérins à vis et en ce que le cadre porteur est relié à un châssis mobile à l'aide d'une pluralité de jeux de bielles pivotantes solidaires les unes des autres grâce à un ensemble de crémaillères, les bielles et les crémaillères étant mues par un groupe moteur et entraînant ainsi le cadre porteur en un mouvement de déplacement qui le maintient parallèle à lui-même.

En outre, pour permettre des réglages fins, le châssis mobile est lui-même monté déplaçable parallèlement à lui-même, grâce à une pluralité de vérins à vis.

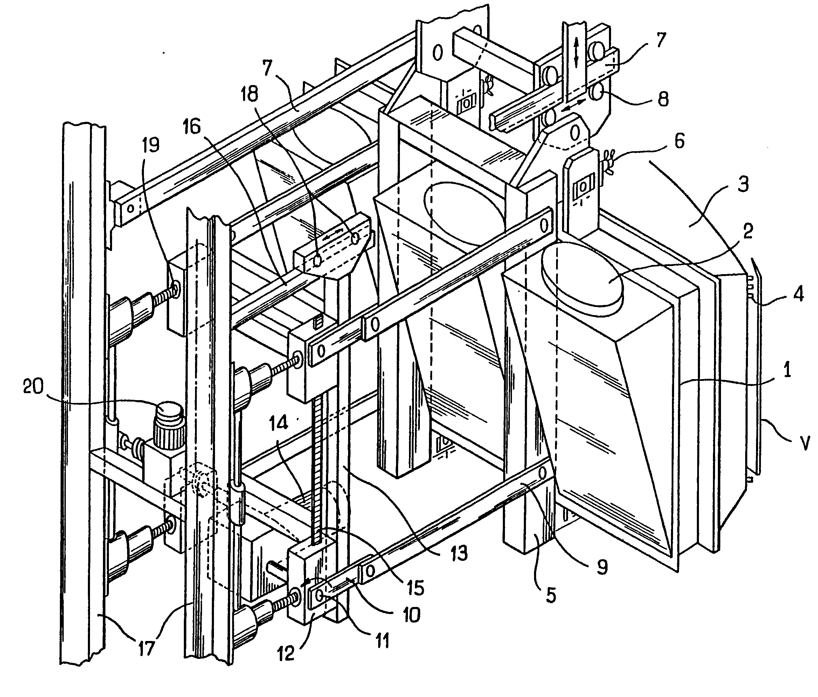

L'invention sera maintenant décrite plus en détail en référence à la figure jointe qui représente une vue schématique en perspective d'une machine de trempe selon l'invention.

Cette figure montre seulement une moitié de la machine, l'autre moitié étant identique à la première et disposée symétriquement par rapport au volume de verre à tremper V dont seulement un bord est visible sur la figure.

On y distingue d'abord des moyens de soufflage constitués par des caissons de répartition d'air tels que 1, alimentés en air de refroidissement par des entrées d'air 2, et par des outillages 3 adaptés à chaque forme de volume de verre à tremper. Ces outillages sont la face des caissons 1, dirigée vers le verre V, munie d'ajutages de sortie de l'air ou de buses 4 de soufflage en direction du verre et conformée de la même façon que les volumes de verre V à tremper.

Ces moyens de soufflage sont reliés à un cadre porteur 5 par une pluralité de vérins à vis 6, en l'occurrence quatre vérins, dont deux seulement sont visibles sur la figure, permettant de faire varier leur orientation. Le cadre porteur 5 très rigide est suspendu à deux barres 7 sur lesquelles il peut se déplacer par l'intermédiaire d'un bogie 8. L'ensemble des moyens de soufflage et du cadre porteur 5 est maintenu verticalement par quatre bielles 9 associées à quatre manivelles 10 tournant sur des axes 11 dans des paliers 12 portés par un châssis mobile 13 sous l'action d'un groupe moto-réducteur frein 14. Les quatre jeux de bielles-manivelles se meuvent solidairement grâce à des crémaillères 15.

Le châssis mobile 13 est suspendu verticalement sur deux rails fixes 16, attachés au bâti général 17 de la machine, par l'intermédiaire de roulettes 18, grâce auxquelles il peut se translater parallèlement à lui-même. La translatioin du châssis mobile 13 par rapport au bâti 17 est obtenue par des vérins à vis 19, notamment quatre, actionnés solidairement par un moto-réducteur frein 20 porté par le bâti 17. Les deux barres 7 sont attachées sur le bâti 17 de façon à pouvoir osciller verticalement sous l'action de moyens classiques non représentés, en vue d'entraîner dans un mouvement d'oscillation les moyens de soufflage pour améliorer la trempe, ainsi qu'il est connu.

Pour tremper des volumes de verre V, on règle d'abord l'orientation des moyens de soufflage grâce aux vérins à vis 6, de façon que la distance entre le verre et lesdits moyens de soufflage, notamment les buses 4 ou les ajutages de soufflage, soit uniforme sur toute la surface du verre, quelle que soit l'inclinaison par rapport à la verticale, prise par le verre lorsqu'il est suspendu par son bord supérieur à l'aide de pinces. Ensuite, les bielles et manivelles étant étendues au maximum, c'est-à-dire dans le prolongement l'une de l'autre afin que les moyens de soufflage soient dans leur position d'avancée maximum, on effectue un réglage fin de position des moyens de soufflage vis-à-vis du verre en translatant le châssis mobile 13 sous l'action du groupe moteur 20 et par l'intermédiaire des vérins à vis 19, de façon que lesdits moyens de soufflage soient à la distance voulue du verre, généralement de l'ordre de quelques millimètres.

Ces réglages s'effectuent bien entendu sur les deux moitiés identiques de la machine de trempe.

Ces réglages étant terminés, la machine est apte à tremper toute une série de volumes de verre du même modèle.

Sous l'action du groupe moteur 14, les bielles 9 et manivelles 10 font reculer les cadres porteurs 5 et les moyens de soufflage qu'ils supportent. Un volume de verre V est introduit au milieu des deux moyens de soufflage, lesquels sont ensuite rapprochés toujours par action du groupe moteur 14 et des bielles 9 et manivelles 10. Dans ce mouvement, les moyens de soufflage peuvent s'avancer ou se reculer d'environ 500 mm.

Tous ces mouvements sont des mouvements d'arrêt sur des fins de course, et en position d'avancée extrême, les bielles et les manivelles sont alignées si bien que l'avancée et le recul des moyens de soufflage sont très précis et sans à-coups.

Le réglage de l'installation étant fait pour une épaisseur de verre, il suffit d'une modification du réglage fin obtenue par action du groupe moteur 20, pour tremper des verres de même forme mais d'épaisseurs différentes.

Les moyens de soufflage à orientation réglable peuvent également être tels qu'ils autorisent la trempe simultanée de plusieurs feuilles de verre comme décrit dans le brevet européen 0 002 055, c'est-à-dire avec des outillages adaptés sur les caissons de soufflage, possèdant plusieurs zones de soufflage séparées par des conduits d'évacuation de l'air soufflé.

Le parallélisme du verre et des moyens de soufflage étant ainsi possible, on obtient une meilleure efficacité générale, d'où une possibilité de réduire la pression de soufflage entraînant une diminution importante de l'énergie consommée, d'où une amélioration du rendement et essentiellement une amélioration de la qualité du verre traité.

**Revendications**

1. Machine pour la trempe du verre en position verticale ayant des moyens de soufflage disposés face à face entre lesquels est destiné à être placé le verre à tremper, montés à orientation variable sur un cadre porteur lui-même déplaçable pour s'éloigner ou se rapprocher de l'autre cadre porteur lui faisant face caractérisée en ce que ces moyens de soufflage (1, 2, 3) sont montés sur le cadre porteur (5) à l'aide d'une pluralité de vérins à vis (6) et en ce que le cadre porteur (5) est relié à un châssis mobile (13) à l'aide d'une pluralité de jeux de bielles-manivelles (9, 10) pivotantes, reliés les uns des autres par un ensemble de crémaillères (15) solidaires, le cadre porteur (5) étant ainsi mobile parallèlement à lui-même par l'intermédiaire des bielles et manivelles sous l'action d'un groupe moteur (14).

2. Machine selon la revendication 1, caractérisée en ce que le châssis mobile (13) est monté déplaçable parallèlement à lui-même dans la même direction que le cadre porteur (5), grâce à une pluralité de vérins à vis (19) solidaires les uns des autres, actionnés par un moto-réducteur frein (20) et s'appuyant sur le bâti général (17) de la machine.  —

3. Machine selon la revendication 2, caractérisée en ce que le cadre porteur (5) est soutenu par un bogie (8) roulant sur des barres (7) orientées dans la direction de déplacement, sensiblement horizontales, reliées au bâti général (17).

4. Machine selon la revendication 3, caractérisée en ce que les barres (7) sont montées libres d'osciller verticalement autour de leur position horizontale par pivotement autour de leur point d'attache au bâti (17), en vue de faire osciller les moyens de soufflage (1, 2, 3) au cours de leur fonctionnement.

5. Machine selon l'une des revendications 1 à 4, caractérisée en ce que le châssis mobile (13) est soutenu par des roulettes (18) roulant sur des rails (16) parallèles fixés au bâti général (17).

6. Machine selon l'une des revendications 1 à 5, caractérisée en ce que la longueur des bielles (9) et des manivelles (10) est telle qu'en position avancée des moyens de soufflage, la bielle et la manivelle d'un même jeu sont dans le prolongement l'une de l'autre.

## Claims

1. A machine for tempering glass in the vertical position having blowing means arranged face-to-face between which the glass to be tempered is to be placed, the blowing means being mounted at variable orientation on a carrying frame itself displaceable towards or away from the other carrying frame facing it, characterised in that the blowing means (1, 2, 3) are mounted on the carrying frame (5) by means of a plurality of screw jacks (6) and in that the carrying frame (5) is connected to a movable chassis (13) by means of a plurality of sets of pivoting crank rods (9, 10), connected to each other by an assembly of racks (15), the carrying frame (5) thus being movable parallel to itself by means of the cranks and rods under the action of a motor device (14).

2. A machine according to claim 1, characterised in that the movable chassis (13) is mounted for displacement parallel to itself in the same direction as the carrying frame (5), by means of a plurality of screw jacks (19) operating together, driven by a reduction motor (20) and mounted on the main frame (17) of the machine.

3. A machine according to claim 2, characterised in that the carrying frame (5) is supported by a carriage (8) rolling on rails (7) oriented in the direction of displacement, substantially horizontal, and connected to the main frame (17).

4. A machine according to claim 3, characterised in that the rails (7) are mounted to oscillate freely vertically about their horizontal position by pivoting about their point of attachment to the frame (17) in order to cause the blowing means (1, 2, 3) to oscillate during its operation.

5. A machine according to one of claims 1 to 4, characterised in that the movable chassis (13) is supported by rollers (18) rolling on parallel rails (16) fixed to the main frame (17).

6. A machine according to one of claims 1 to 5, characterised in that the length of the rods (9) and the cranks (10) is such that in the advanced position of the blowing means, the rod and crank of each set are at dead centre.

## Patentansprüche

1. Vorrichtung zum Vorspannen von Glas in vertikaler Stellung, mit gegenüberliegend angeordneten und zwischen sich einen Raum zur Aufnahme des vorzuspannenden Glases begrenzenden Blaseinrichtungen, die in ihrer Ausrichtung einstellbar auf einem Tragrahmen angeordnet sind, der selbst verschiebbar ist, so daß er auf den gegenüberliegenden Tragrahmen zu bzw. von diesem wegbewegt werden kann dadurch gekennzeichnet, daß die Blaseinrichtungen (1, 2, 3) auf dem Tragrahmen (5) mittels einer Anzahl von Schraubwinden (6) angeordnet sind und daß der Tragrahmen (5) mit einem bewegbaren Gestell (13) durch einer Anzahl von (schwenkbaren Kurbelstangen-Getrieben (9, 10) verbunden ist, welche untereinander durch eine Anordnung von gemeinsamen Zahnstangen (15) verbunden sind, so daß der Tragrahmen (5) durch Motorantrieb (14) über die Kurbelstangen-Getriebe parallel zu sich selbst bewegbar ist.

2. Vorrichtung nach Anspruch 1, dadurch gekennzeichnet, daß das bewegbare Gestell (13) in der gleichen Richtung wie der Tragrahmen (5) parallel zu sich selbst durch eine Anzahl von miteinander gekoppelten Schraubenwinden (19) verschiebbar ist, die durch einen Bremsgetriebemotor (20) betätigt sind und sich auf dem Maschinenrahmen (17) abstützen.

3. Vorrichtung nach Anspruch 2, dadurch gekennzeichnet, daß der Tragrahmen (5) von einem Schlitten (8) aufgenommen ist, welcher auf in Verschieberichtung ausgerichteten und im wesentlichen horizontalen Schienen (7) rollt, die mit dem Maschinenrahmen (17) verbunden sind.

4. Vorrichtung nach Anspruch 3, dadurch gekennzeichnet, daß die Schienen (7) frei in Vertikalrichtung um ihre horizontale Lage durch Verschwenkung um ihre Befestigungspunkte am Maschinenrahmen (17) hin- und herschwenkbar sind, so daß die Blaseinrichtungen (1, 2, 3) während des Betriebs hin- und hergeschwenkt werden können.

5. Vorrichtung nach einem der Ansprüche 1 bis 4, dadurch gekennzeichnet, daß das bewegliche Gestell (13) auf Rollen (18) abgestützt ist, die auf parallelen, am Maschinenrahmen (17) befestigten Schienen (16) laufen.

6. Vorrichtung nach einem der Ansprüche 1 bis 5, dadurch gekennzeichnet, daß die Stangen (9) und die Kurbeln (10) derart lang sind, daß in vorgerückter Stellung der Blaseinrichtungen die Stange und die Kurbel ein und desselben Getriebes sich in Verlängerung voneinander befinden.